# FASCICULE DE BREVET EUROPEEN

(11) **EP 1 331 126 B1**
(45) Date de publication et mention de la délivrance du brevet: **15.04.2009**
(21) Numéro de dépôt: 03290050.8
(22) Date de dépôt: 09.01.2003
(51) Int. Cl.: B60K 6/20, F16D 3/12, F16F 15/123

(54) **Système de propulsion hybride d'un véhicule automobile avec dispositif d'accouplement élastique entre le rotor de la machine électrique tournante réversible et l'arbre primaire de la boîte de vitesses du moteur thermique du véhicule automobile**
Hybridantriebssystem eines Kraftfahrzeugs mit elastischer Kupplungsvorrichtung zwischen dem Rotor der reversiblen elektrischen Maschine und der Antriebswelle des Schaltgetriebes des Kraftfahrzeugs
Hybride propulsion system of an automotive vehicle with an elastic coupling device between the rotor of the reversible electric machine and the primary shaft of the gearbox of the automotive vehicle internal combustion engine

(30) Priorité: 25.01.2002 FR 0200933
(43) Date de publication de la demande: 30.07.2003
(73) Titulaire: Peugeot Citroën Automobiles S.A., 92200 Neuilly-Sur-Seine (FR)
(72) Inventeur: Honorio, François, 95490 Vaureal (FR); Jouve, Pierre-André, 92290 Chatenay-Malabry (FR)

(56) Documents cités:
- FR-A- 2 804 185
- US-A- 4 453 838
- US-A- 5 691 588
- US-A- 5 722 525
- US-B1- 6 294 854
- PATENT ABSTRACTS OF JAPAN vol. 2000, no. 14, 5 mars 2001 (2001-03-05) & JP 2000 309226 A (UNISIA JECS CORP), 7 novembre 2000 (2000-11-07)

## Description

La présente invention concerne un système de propulsion hybride d'un véhicule automobile ayant un dispositif d'accouplement élastique entre le rotor de la machine électrique tournante réversible et l'arbre primaire de la boîte de vitesses du moteur thermique du groupe motopropulseur hybride du véhicule automobile.

Le rotor de la machine électrique tournante, qui peut être un alternateur-démarreur, est solidaire d'un moyeu monté concentriquement à l'arbre primaire et est relié à ce dernier par des moyens d'accouplement permettant soit d'entraîner en rotation le rotor par l'arbre vilebrequin du moteur thermique pour faire fonctionner la machine électrique tournante en alternateur, soit d'entraîner en rotation l'arbre primaire pour faire fonctionner le véhicule en mode de traction électrique.

Cependant, ces moyens d'accouplement connus ont pour inconvénient d'être sensibles aux déplacements de l'arbre primaire et au fonctionnement acyclique du moteur thermique ainsi qu'aux déformations géométriques de cet arbre, provoquant de la sorte des dysfonctionnements de la machine électrique. En outre, les moyens d'accouplement ne sont pas adaptés pour compenser un écart de concentricité pouvant se produire entre le rotor de la machine électrique et l'arbre primaire de la boîte de vitesses.

On connait du document FR-A-2 804 185 un système selon le préambule de la revendication 1. Ce système a une architecture complexe dans laquelle un moyen d'accouplement est intégré dans un volant d'inertie; le volant d'inertie servant à la fois de support pour le rotor de la machine électrique et de cage pour le dispositif d'embrayage. Cependant cette architecture complexe ne s'adapte pas facilement à une chaîne de traction standard.
La présente invention a pour but d'éliminer cet inconvénient en proposant un système selon la revendication 1.

De préférence, les moyens d'accouplement comprennent au moins deux ressorts hélicoïdaux de compression montés précontraints de façon angulairement équidistante suivant sensiblement une même circonférence respectivement dans deux cages solidaires en rotation du flasque du moyeu, et deux paires de crabots parallèles solidaires d'un même côté de la paroi annulaire de façon angulairement équidistante suivant une même circonférence, les deux crabots d'accouplement de chaque paire étant en appui respectivement sur les deux spires extrêmes d'un ressort d'accouplement correspondant.

Les cages de logement des ressorts sont fixées à une face d'un plateau annulaire logé dans le moyeu du rotor de façon adjacente au flasque en étant accouplé en rotation au moyeu et chaque cage comprend deux parois parallèles s'étendant perpendiculairement de la face du plateau annulaire et entre lesquelles est logé le ressort correspondant dont les parties de spires supérieure et inférieure traversent respectivement deux fenêtres rectangulaires des deux parois et les spires extrêmes sont en appui respectivement sur les deux bords d'extrémités circonférentiellement espacés des deux fenêtres, les deux crabots associés au ressort et en appui sur les spires extrêmes du ressort, s'étendant parallèlement aux deux parois.

Le plateau annulaire logé dans le moyeu comprend au moins deux doigts faisant radialement saillie élastiquement à l'extérieur du plateau entre deux ressorts adjacents de ce plateau et qui sont engagés chacun dans une encoche radiale conjuguée du moyeu pour accoupler en rotation le moyeu et le plateau annulaire.

Le moyeu comprend au moins deux autres encoches radiales adjacentes respectivement aux deux encoches conjuguées de réception des doigts radiaux et permettant un montage axial en aveugle dans le moyeu du plateau annulaire accouplé à la paroi annulaire par insertion provisoire des doigts dans les deux autres encoches qui ont l'un de leur côté en forme de rampe permettant d'amener le doigt correspondant dans l'encoche conjuguée du moyeu par rotation du rotor et du moyeu relativement au plateau annulaire dans le sens approprié pour l'accouplement en rotation du plateau annulaire au moyeu.

Selon un premier mode de réalisation, le plateau annulaire comprend au moins deux parois arquées solidaires perpendiculairement du plateau et à travers lesquelles font saillie radialement respectivement les deux doigts d'accouplement.

Chaque doigt radial est solidaire d'un piston monté coulissant à l'encontre de la force de rappel d'un ressort dans un cylindre radial fixé sous la paroi arquée associée située au voisinage du bord externe du plateau annulaire.

Selon un second mode de réalisation, chaque doigt radial est solidaire d'une lame radialement flexible fixée par ses extrémités, suivant une direction circonférentielle, sur deux parois circonférentiellement espacées solidaires du plateau annulaire perpendiculairement à celui-ci au voisinage de son bord externe.

Chaque doigt est fixé au milieu de la lame flexible en faisant saillie au-dessus de celle-ci.

Avantageusement, chaque doigt est en forme de tenon pouvant s'engager dans l'encoche provisoire ou l'encoche conjuguée définitive correspondante en forme de rainure s'étendant axialement dans le moyeu.

La paroi annulaire est solidaire d'une partie centrale généralement cylindrique coaxiale à l'arbre primaire et solidaire en rotation de cet arbre par l'intermédiaire de cannelures.

Cette partie cylindrique centrale est logée concentriquement avec jeu radial annulaire dans une partie cylindrique centrale du moyeu à laquelle est solidaire le flasque du moyeu.

Le plateau annulaire et la paroi annulaire sont retenus axialement l'un par rapport à l'autre par une ou plusieurs languettes radialement élastiques s'étendant axialement du plateau annulaire, s'engageant dans un ou plusieurs passages traversants de la paroi annulaire et ayant leur extrémité libre recourbée en appui sur la face de la paroi annulaire opposée à celle comportant les crabots.

Une bague annulaire élastique d'une raideur axiale déterminée est interposée entre la paroi annulaire et le plateau annulaire du moyeu pour les maintenir espacés parallèlement l'un par rapport à l'autre et autorisant un pivotement relatif angulairement limité hors de leur position parallèle pour filtrer des écarts en flexion de l'arbre primaire et les acyclismes du moteur thermique et/ou les déformations géométriques de cet arbre.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant plusieurs modes de réalisation de l'invention et dans lesquels :
- la figure 1 est une vue en coupe longitudinale représentant une machine électrique tournante réversible faisant partie d'un groupe motopropulseur hybride d'un véhicule automobile, et comportant un dispositif d'accouplement de l'invention pour accoupler l'arbre primaire de la boîte de vitesses au rotor de la machine électrique ;
- la figure 2 est une vue en coupe agrandie suivant la ligne II-II de la figure 1 ;
- la figure 3 est une vue en perspective éclatée représentant le moyeu du rotor et une partie annulaire du dispositif d'accouplement à l'arbre primaire ;
- la figure 4 est une vue en perspective d'une variante de réalisation de la partie annulaire du dispositif d'accouplement du moyeu à l'arbre primaire de la boîte de vitesses ;
- la figure 5 représente une variante de réalisation du dispositif d'accouplement de l'invention ; et
- la figure 6 est une vue en coupe suivant la ligne VI-VI de la figure 5.

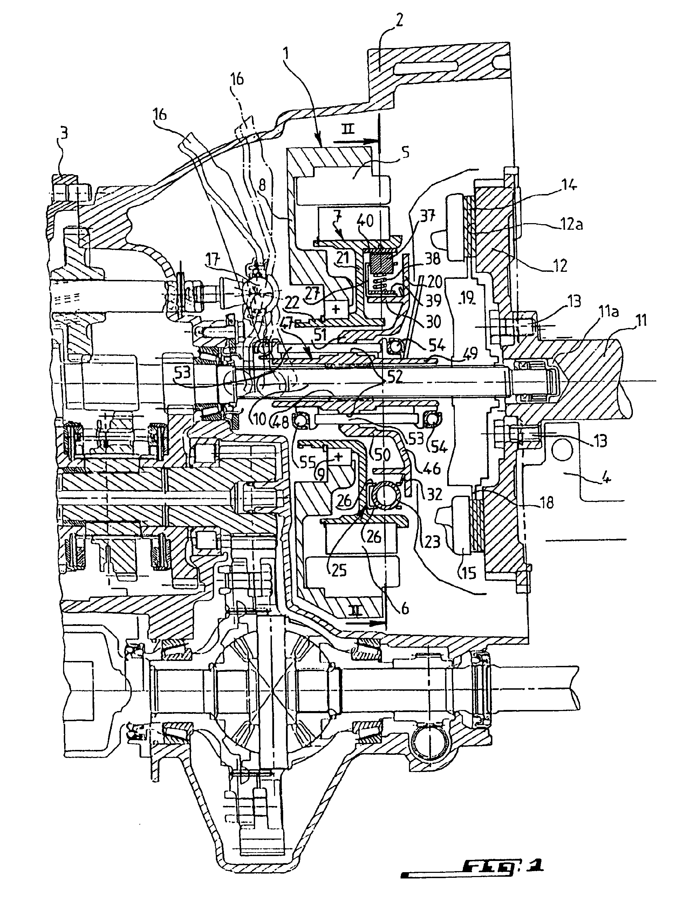

En se reportant à la figure 1, la référence 1 désigne une machine électrique tournante réversible ou alternateur-démarreur, logée dans un carter d'embrayage 2 qui est fixé entre le carter 3 de la boîte de vitesses et le carter 4 du moteur thermique d'un véhicule automobile.

La machine électrique 1 fait ainsi partie d'un groupe motopropulseur hybride.

Cette machine comprend essentiellement un stator annulaire 5 qui est fixé relativement au carter d'embrayage 2 et un rotor annulaire 6 logé dans le stator fixe 5 en définissant par rapport à ce dernier un entrefer.

Le rotor 6 est monté de façon solidaire sur un moyeu de support 7 qui est monté à rotation relativement à un carter indépendant 8 par l'intermédiaire d'un palier 9, par exemple du type à roulement à billes.

L'ensemble constitué par le stator 5, le rotor 6, le moyeu 7 et le palier 9 est logé dans le carter indépendant 8 qui est fixé au carter d'embrayage 2 par des vis de fixation (non représentées) de façon que le carter 8 soit logé dans le carter d'embrayage 2 en étant espacé de ce dernier.

Le moyeu de support 7 est disposé concentriquement autour d'un arbre primaire ou arbre d'entrée 10 de la boîte de vitesses. L'arbre primaire 10 est monté à rotation, à son extrémité opposée à la boîte de vitesses 3, dans un alésage borgne 11a réalisé en bout de l'arbre vilebrequin 11 du moteur thermique.

Un volant d'inertie 12 est fixé à l'arbre vilebrequin 11 par des vis de fixation 13 et comporte une face dressée 12a perpendiculaire à l'arbre vilebrequin 11 sur laquelle peut venir en engagement par friction un disque d'embrayage de friction 14 à déplacement axial commandé par un plateau 15. Le plateau d'embrayage 15 est commandé par des moyens formant butée de débrayage, qui seront définis ultérieurement, à déplacement commandé par une fourchette de commande 16 montée sur le carter d'embrayage 2 par une articulation à rotule 17. Le disque d'embrayage 14 est relié par un accouplement flexible 18 à un moyeu 19 solidaire en rotation de l'arbre primaire 10 de la boîte de vitesses 3, par exemple par des cannelures.

En position embrayée de l'embrayage constitué par le disque 14 et le plateau 15, la rotation de l'arbre vilebrequin 11 est transmise à l'arbre primaire 10 par l'accouplement flexible 18 et le moyeu 19, tandis qu'en position débrayée de cet embrayage, lors du passage d'un rapport de vitesse, l'arbre vilebrequin 11 est désaccouplé de l'arbre primaire 10.

Selon l'invention, un dispositif est prévu pour accoupler le rotor 6 de la machine électrique 1 à l'arbre primaire 10 de la boîte de vitesses 3.

Ce dispositif comprend une paroi annulaire 20 solidaire en rotation de l'arbre primaire 10 s'étendant transversalement à celui-ci comme on le verra ultérieurement, un flasque 21 du moyeu 7 parallèle à la paroi annulaire 20 en étant solidaire d'une partie centrale cylindrique 22 du moyeu 7 concentrique à l'arbre primaire 10, et des moyens d'accouplement élastique 23, 24 procurant une même raideur en direction circonférentielle de la paroi 20 ou du flasque 21 pour permettre la transmission du couple de rotation de la machine électrique 1 et d'amortir les déplacements relatifs en rotation entre la paroi 20 et le flasque 21 résultant des déplacements de l'arbre primaire 10, des acyclismes du moteur thermique et/ou des déformations géométriques de cet arbre.

De préférence, les moyens d'accouplement 23, 24 comprennent trois ressorts hélicoïdaux de compression 23 montés précontraints de façon angulairement équidistante suivant sensiblement une même circonférence respectivement dans trois cages 25 solidaires en rotation du flasque 21 du moyeu 7 et trois paires de crabots parallèles 24 solidaires du côté de la paroi annulaire 20 en regard du flasque 21 de façon angulairement équidistante suivant une même circonférence, les deux crabots d'accouplement 24 d'une même paire étant en appui respectivement sur les deux spires extrêmes d'un ressort d'accouplement correspondant 23. Les crabots 24 sont montés coaxialement à l'arbre primaire 10 en s'étendant ainsi parallèlement à cet arbre. Bien entendu, il est possible de prévoir deux ressorts 23 logés respectivement dans deux cages 25 ou plus de trois ressorts 23 angulairement espacés de façon équidistante suivant une même circonférence.

Chaque cage 25 de logement d'un ressort 23 comprend deux parois parallèles 26 s'étendant perpendiculairement de la face d'un plateau annulaire 27 en regard de la face de la paroi annulaire 20 comportant les crabots 24 et entre lesquelles est logé le ressort correspondant 23 dont les parties de spires supérieure et inférieure traversent respectivement deux fenêtres rectangulaires 28 des deux parois 26 et les spires extrêmes sont en appui respectivement sur les bords d'extrémité circonférentiellement opposés 28a des deux fenêtres 28 de façon à précontraindre le ressort 23. Le plateau annulaire 27 ainsi que les cages 25 des ressorts 23 sont logés dans le moyeu 7 de façon que la face latérale du plateau 27 opposée à celle comportant les cages 25 soit en appui sur le flasque 21 de ce moyeu. Le plateau annulaire 27 est monté concentriquement à l'arbre primaire 10 parallèlement à la paroi annulaire 20. Les deux crabots 24 associés à un ressort 23 s'étendent parallèlement aux deux parois 26 en étant situés suivant l'axe longitudinal de ce ressort transversalement à cet axe.

Le plateau annulaire 27 est positionné relativement à la paroi annulaire 20 par au moins une paroi arquée 29 solidaire d'une partie du bord interne circulaire 27a définissant l'ouverture centrale du plateau 27, la paroi arquée 29 s'étendant perpendiculairement du plateau 27 et venant en appui sur une partie formant moyeu 30 solidaire de la paroi annulaire 20 concentriquement à l'arbre primaire 10. Pour maintenir axialement l'un à l'autre la paroi annulaire 20 et le plateau annulaire 27, la paroi arquée 29 possède une languette radialement élastique 31 prolongeant la paroi 29 sensiblement au milieu de celle-ci en direction axiale et qui se termine par une extrémité libre recourbée à angle droit 31a. La languette 31 traverse un passage correspondant (non représenté) de la paroi annulaire 20 et son extrémité recourbée 31a est en appui sur la face latérale de la paroi 20 opposée à celle en regard des ressorts 23 pour assurer le maintien axial de la paroi 20 relativement au plateau annulaire 27. Bien entendu, il est possible de prévoir deux ou trois parois arquées 29, au lieu d'une seule, chacune pouvant comporter une languette radialement élastique 31 de retenue axiale de la paroi 20 et du plateau 27.

Pour maintenir parallèlement la paroi 20 et le plateau 27, une bague annulaire élastique 32 est montée concentriquement sur la partie formant moyeu 30 et agit sur le plateau 27 pour le repousser axialement de la paroi 20 dans le moyeu 7. La bague élastique 32 est de forme tronconique dont l'extrémité de plus grand diamètre est en appui sur l'extrémité de la paroi arquée 29 et les extrémités correspondantes des parois 26 des cages 25 des ressorts 23. Cette bague a une raideur axiale permettant de maintenir parallèlement l'un à l'autre le plateau 27 et la paroi 20, mais autorise un pivotement relatif angulairement limité, hors de leur position parallèle pour filtrer les écarts en flexion de l'arbre primaire 10, le fonctionnement acyclique du moteur thermique et/ou les déformations géométriques de cet arbre. Le pivotement relatif de la paroi 20 et du plateau 27 au-delà de la raideur de la bague 32 peut s'effectuer par déformation élastique radiale de la paroi arquée 29 relativement au moyeu 30.

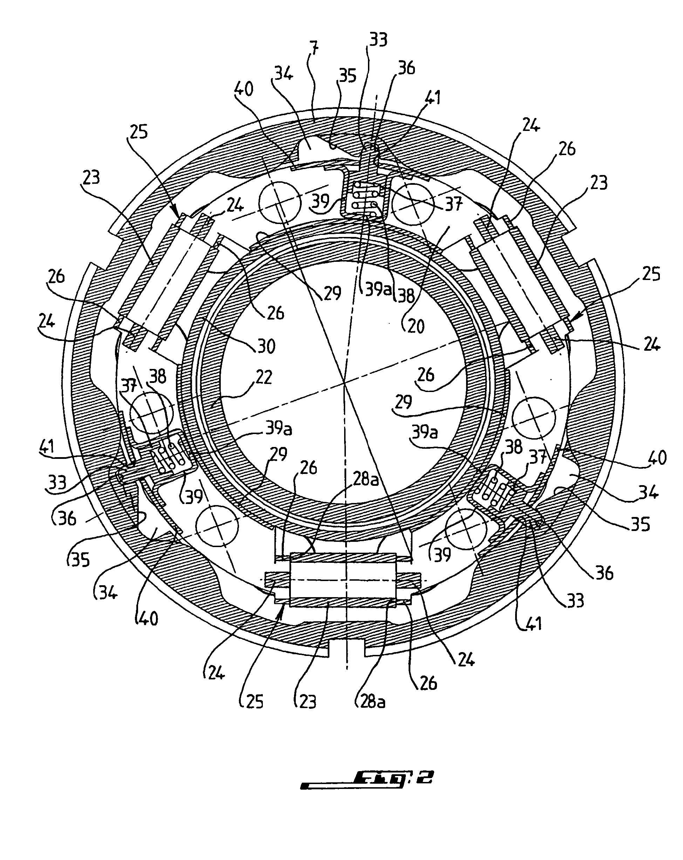

Le plateau annulaire 27 est logé dans le moyeu 7 en étant accouplé en rotation à ce dernier par trois doigts 33 faisant radialement saillie élastiquement à l'extérieur du plateau 27 et permettant à l'ensemble assemblé constitué par le plateau 27 et la paroi 20 d'être monté axialement en aveugle dans le moyeu 7 en insérant provisoirement les doigts 33 respectivement dans des encoches radiales 34 réalisées dans le moyeu 7 et dimensionnées pour faciliter l'insertion dans celles-ci des doigts 33. Chaque encoche radiale 34 a l'un de ses côtés 35 en forme de rampe inclinée de l'extérieur vers l'intérieur du moyeu 7 dans le sens des aiguilles d'une montre si l'on considère la figure 2 pour aboutir à une autre encoche radiale adjacente 36 dans laquelle est définitivement engagé le doigt correspondant 33 en alimentant la machine électrique de façon à faire tourner le rotor 6 et le moyeu 7 dans le sens approprié, c'est-à-dire dans le sens opposé à celui des aiguilles d'une montre en considérant la figure 2. Les doigts 33 sont angulairement espacés de façon équidistante en étant chacun situé entre deux ressorts 23 et peuvent être d'un nombre différent de trois, par exemple de deux ou quatre.

Selon le mode de réalisation représenté aux figures 1 à 3, chaque doigt radial 33 est solidaire d'un piston 37 monté coulissant, à l'encontre de la force de rappel d'un ressort de compression précontraint 38, dans un cylindre radial 39 fixé sous une paroi arquée 40 solidaire perpendiculairement de la face du plateau annulaire 27 comportant les cages 25 approximativement au voisinage du bord circulaire externe du plateau 27. Le doigt 33 traverse une ouverture correspondante 41 réalisée dans la paroi arquée 40 et le piston 37 est rappelé en appui sur la face interne de la paroi 40 par le ressort 38 interposé entre le piston 37 et la paroi de fond 39a du cylindre 39. Chaque doigt 33 peut présenter la forme d'un tenon s'étendant axialement et pouvant s'engager dans l'une ou l'autre des encoches 34, 36 en forme de rainure axiale, celle de l'encoche 36 étant de forme conjuguée au doigt 33.

Les encoches 34, 36 et la rampe 35 peuvent être réalisés directement dans le moyeu 7 ou dans une pièce rapportée dans celui-ci, permettant dans ce dernier cas d'utiliser des moyeux standards.

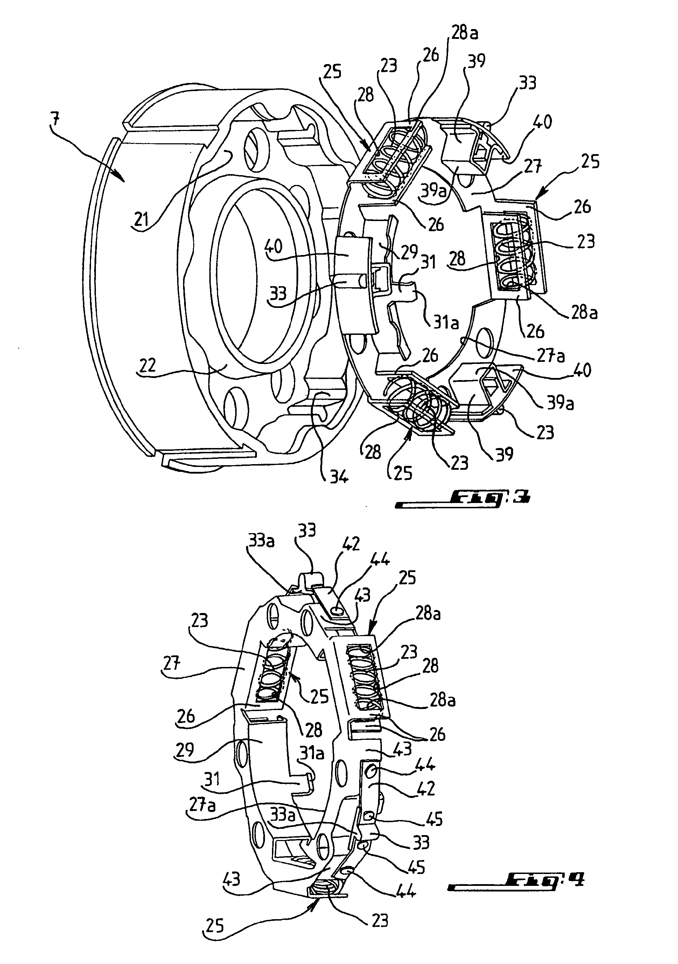

Le mode de réalisation du dispositif d'accouplement utilisant le plateau annulaire 27 de la figure 4 ne diffère du dispositif d'accouplement précédemment décrit que par la façon dont sont montés les doigts 33 sur ce plateau.

Selon ce mode de réalisation, chaque doigt d'accouplement 33, de forme identique au doigt 33 du premier mode de réalisation, est fixé approximativement au milieu d'une lame radialement flexible 42 en faisant saillie au-dessus de celle-ci et qui est fixée suivant une direction circonférentielle sur deux parois circonférentiellement espacées 43, dans le cas présent planes mais qui peuvent être arquées, s'étendant perpendiculairement du plateau annulaire 27 de la face comportant les ressorts 23, chaque paroi 43 étant située sensiblement au voisinage du bord externe du plateau 27. Les deux extrémités de chaque lame 42 sont fixées respectivement sur les deux parois 43 par exemple par des rivets 44. Chaque lame 42 est en fait constituée de deux parties identiques en prolongement l'une de l'autre et entre lesquelles est fixé le doigt 33 qui est solidaire d'une embase 33a de laquelle fait saillie perpendiculairement le doigt 33 et qui est fixée sous les deux parties de la lame 42 par deux rivets 45. Chaque lame 42 peut fléchir en son centre en direction radialement interne grâce à une dépression se trouvant entre les deux parois 43.

L'accouplement par les doigts 33 du plateau annulaire 27 au moyeu 7 permet, dans les deux modes de réalisation décrits ci-dessus, de compenser tout écart de coaxialité entre le rotor 6 de la machine électrique 1 et l'arbre primaire 10 de la boîte de vitesses. Les doigts 33 permettent un accouplement autocentré, rapide et un montage en aveugle de l'ensemble constitué par le plateau 27 et la paroi annulaire 20 dans le moyeu 7. En effet, il suffit de présenter cet ensemble de façon à l'introduire dans le moyeu 7 avec les doigts 33 s'engageant librement dans les encoches radiales 34. Ensuite, la machine électrique est alimentée en courant électrique pour faire tourner le moyeu 7 relativement à la paroi 20 et au plateau 27 dans le sens permettant d'engager chaque doigt 33 dans son logement définitif constitué par l'encoche adjacente conjuguée 36 après enfoncement en direction radialement interne du doigt 33 le long de la rampe 35, le ressort 38 engageant automatiquement le doigt 33 dans l'encoche 36.

La paroi annulaire 20 est solidaire, par l'intermédiaire d'une paroi tronconique 46, d'une partie centrale généralement cylindrique 47 montée coaxialement sur l'arbre primaire 10 en étant liée à rotation à ce dernier par l'intermédiaire de cannelures 48.

La partie centrale cylindrique 47 est logée concentriquement dans la partie centrale cylindrique 22 du moyeu 7 en définissant par rapport à ce dernier un espace ou jeu annulaire.

La partie cylindrique 47 comprend un manchon interne 49 solidaire en rotation de l'arbre primaire 10 par les cannelures 48 et un manchon externe 50 raccordé d'une part à la paroi tronconique de liaison 46 avec la paroi annulaire 20 et d'autre part au manchon interne 49 par l'intermédiaire d'une paroi annulaire 51 traversée par un certain nombre de perçages 52 angulairement espacés les uns des autres de façon équidistante selon une même circonférence et traversés respectivement par des tiges cylindriques 53 s'étendant parallèlement à l'arbre primaire 10 et comportant à l'une de leurs extrémités des moyens formant butée de débrayage 54 agissant sur les moyens d'embrayage. Les tiges 53 sont déplaçables parallèlement à l'arbre primaire 10 entre leurs états d'embrayage et de débrayage des moyens d'embrayage par la fourchette de commande 16 agissant, de façon connue en soi, sur les extrémités des tiges 53 opposées aux moyens d'embrayage et pourvues respectivement de butées 55.

En position embrayée des moyens d'embrayage, l'arbre vilebrequin 11 entraîne l'arbre primaire 10 qui entraîne en rotation la paroi annulaire 20 et le plateau annulaire 27 lequel entraîne en rotation, par les doigts 33, le moyeu 7 et, par conséquent, le rotor 6 de la machine électrique 1 qui fonctionne alors en générateur de courant électrique pour alimenter divers appareils électriques du véhicule.

Lorsque la machine électrique 1 est alimentée en courant électrique en mode de traction électrique du véhicule, le rotor 6 et le moyeu 7 tournent à l'unisson, la paroi annulaire 20 est entraînée en rotation par le plateau 27 de façon à entraîner en rotation l'arbre primaire 10, les moyens d'embrayage étant bien entendu à l'état débrayé.

Lors d'un fonctionnement acyclique du moteur thermique ou de déformations géométriques de l'arbre primaire, les écarts en torsion résultants appliqués entre la paroi annulaire 20 et le plateau annulaire 27 sont amortis par les ressorts 23 sur lesquels agissent les crabots 24 suivant le sens du mouvement de torsion.

Ce fonctionnement acyclique du moteur thermique ou ces déformations géométriques de l'arbre primaire peuvent provoquer des écarts en flexion de cet arbre qui sont alors amortis par la bague annulaire 32 permettant un pivotement relatif angulaire de la paroi 20 et du plateau 27 par rapport à l'axe longitudinal du rotor 6 de part et d'autre de la position normalement perpendiculaire relativement à cet axe de la paroi 20 et du plateau 27.

Le dispositif d'accouplement a ainsi la double fonction d'une part d'amortissement permettant la filtration des déplacements de l'arbre primaire 10 et du fonctionnement acyclique du moteur thermique tout en permettant de compenser un écart de coaxialité entre le rotor 6 de la machine électrique 1 et l'arbre primaire 10, et d'autre part de liaison d'entraînement en rotation entre le moyeu 7 du rotor 6 et l'arbre primaire 10. Les ressorts 23 et la bague annulaire 32 sont montés de façon à procurer respectivement la même raideur en direction circonférentielle et la même raideur en direction axiale. De plus, lorsque les doigts d'accouplement 33 présentent une forme générale en tenon s'engageant dans leurs encoches définitives respectives à la manière d'un clavetage, un tel agencement permet de compenser les tolérances ou cotes de fabrication ou d'usinage pouvant provoquer une différence de positionnement axiale entre la paroi annulaire 20 et le moyeu 7 du rotor 6. Enfin, la liaison en rotation entre le moyeu 7 et l'arbre primaire 10 par l'intermédiaire des doigts d'accouplement 33 permet un démontage aisé du dispositif d'accouplement.

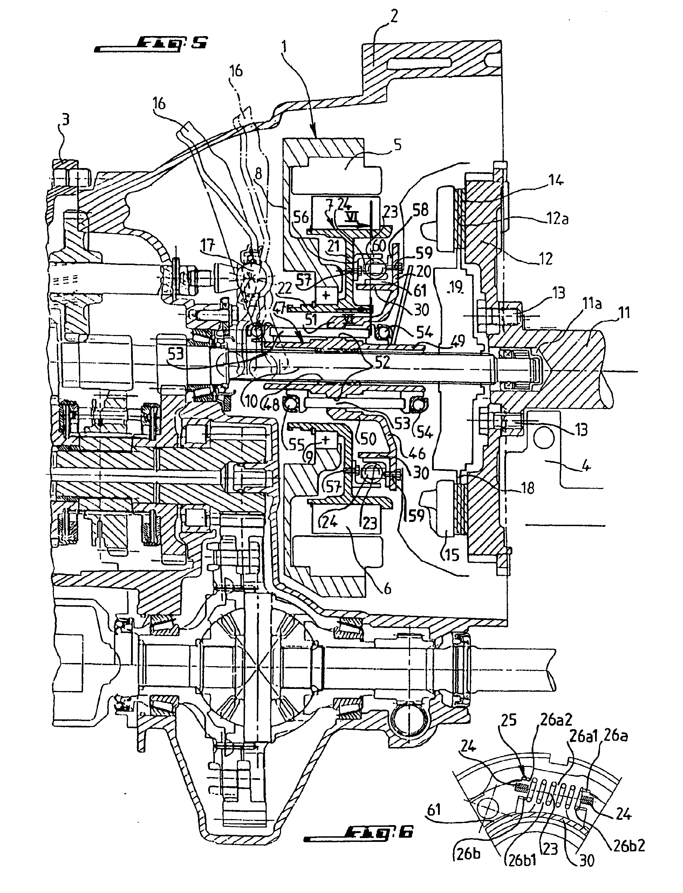

Selon le mode de réalisation représenté aux figures 5 et 6 où les pièces identiques à celles du mode de réalisation des figures 1 à 4 et accomplissant les mêmes fonctions portent les mêmes références, le dispositif d'accouplement comprend également au moins deux ressorts hélicoïdaux de compression 23 montés précontraints de façon régulièrement équidistante et suivant sensiblement une même circonférence respectivement dans deux cages 25, chaque cage étant définie par une première plaque ou paroi rigide 26a solidaire d'un plateau annulaire 56 logé dans le moyeu 7 et fixé au flasque 21 par des vis de fixation 57, et une seconde plaque ou paroi rigide 26b parallèle à la première paroi 26a et solidaire perpendiculairement de la face d'un autre plateau annulaire 58 opposée à la face du plateau 56 et fixé à la paroi annulaire 20 par des vis de fixation 59.

Chaque ressort 23 est logé entre deux parois parallèles 26a, 26b de façon que ses parties de spires supérieure et inférieure traversent respectivement deux fenêtres rectangulaires 26a1, 26b1 des deux parois 26a, 26b et les spires extrêmes soient en appui respectivement sur des bords d'extrémités circonférentiellement espacés 26a2, 26b2 des deux fenêtres.

Les moyens d'accouplement comprennent en outre au moins deux paires de crabots parallèles 24 solidaires de la face du plateau annulaire 58 en regard des ressorts 23 en étant situés de façon angulairement équidistante suivant une même circonférence, les deux crabots 24 d'une même paire étant en appui respectivement sur les deux spires extrêmes du ressort d'accouplement correspondant 23 en s'étendant parallèlement aux deux parois 26a, 26b d'une cage 25.

De préférence, la première paroi 26a d'une cage 25 fait partie d'une paroi cylindrique 60, c'est-à-dire est intégralement réalisée avec celle-ci, ou est rapportée à cette paroi cylindrique 60 en y étant fixée par exemple par soudage, et la seconde paroi 26b de la cage 25 est solidaire d'un moyeu 61 du plateau 58 fixé à la paroi annulaire 20.

Le dispositif d'accouplement de ce second mode de réalisation présente autrement les mêmes caractéristiques techniques que celle du dispositif décrit en référence aux figures 1 à 4.

## Revendications

1. Système de propulsion hybride d'un véhicule automobile, comprenant un moteur thermique, dont l'arbre moteur (11) entraîne en rotation un volant d'inertie (12) ; une boîte de vitesses (3) ; une machine électrique tournante réversible (1) comprenant un stator (5) solidaire d'un carter fixe (8) et un rotor (6) solidaire d'un moyeu (7) monté concentriquement à l'arbre primaire (10) de la boîte de vitesses en étant monté à rotation relativement au carter fixe (8) ; et des moyens d'embrayage (14, 15) pouvant être commandés pour notamment accoupler le volant d'inertie (12) à l'arbre primaire (10) de la boîte de vitesses, le rotor (6) de la machine électrique tournante (1) étant accouplé à l'arbre primaire (10) par un dispositif d'accouplement élastique pour faire fonctionner la machine électrique tournante (1) notamment en mode de générateur de courant électrique d'alimentation de l'appareillage du véhicule, ledit dispositif d'accouplement élastique comprenant une paroi annulaire (20) solidaire en rotation de l'arbre primaire (10) et s'étendant transversalement à ce dernier, un flasque (21) du moyeu (7) parallèle à la paroi annulaire (20), et des moyens élastiques (23, 24) de même raideur en direction circonférentielle interposés entre la paroi annulaire (20) et le flasque (21) pour accoupler en rotation l'un à l'autre ces derniers et amortir les déplacements relatifs en rotation entre la paroi annulaire (20) et le flasque (21) résultant des déplacements de l'arbre primaire (10) et des acyclismes du moteur thermique et/ ou des déformations géométriques de cet arbre, **caractérisé en ce que** la paroi annulaire (20) est solidaire d'une partie centrale généralement cylindrique (47) coaxiale à l'arbre primaire (10) et solidaire en rotation de l'arbre primaire (10) par l'intermédiaire de cannelures (48) ; la partie cylindrique centrale (47) étant logée concentriquement avec jeu radial annulaire dans une partie cylindrique centrale (22) du moyeu (7) à laquelle est solidaire le flasque (21) du moyeu.

2. Système selon la revendication 1, **caractérisé en ce que** les moyens d'accouplement élastique comprennent au moins deux ressorts hélicoïdaux de compression (23) montés précontraints de façon angulairement équidistante suivant sensiblement une même circonférence respectivement dans deux cages (25) solidaires en rotation du flasque (21) du moyeu (7), et deux paires de crabots parallèles (24) solidaires d'un même côté de la paroi annulaire (20) de façon angulairement équidistante suivant une même circonférence, les deux crabots d'accouplement (24) de chaque paire étant en appui respectivement sur les deux spires extrêmes d'un desdits deux ressorts hélicoïdaux d'accouplement correspondant (23).

3. Système selon la revendication 2, **caractérisé en ce que** les cages de logement (25) des ressorts hélicoïdaux d'accouplement (23) sont fixées à une face d'un plateau annulaire (27) logé dans le moyeu (7) du rotor (6) de façon adjacente au flasque (21) en étant accouplé en rotation au moyeu (7) et chaque cage (25) comprend deux parois parallèles (26) s'étendant perpendiculairement de la face du plateau annulaire (27) et entre lesquelles est logé le ressort hélicoïdal d'accouplement correspondant (23) dont les parties de spires supérieure et inférieure traversent respectivement deux fenêtres rectangulaires (28) des deux parois (26) et les spires extrêmes sont en appui respectivement sur les deux bords d'extrémités circonférentiellement espacés (28a) des deux fenêtres (28), les deux crabots (24) associés au ressort hélicoïdal d'accouplement (23) et en appui sur les spires extrêmes du ressort, s'étendant parallèlement aux deux parois (26).

4. Système selon la revendication 3, **caractérisé en ce que** le plateau annulaire (27) logé dans le moyeu (7) comprend au moins deux doigts (33) faisant radialement saillie élastiquement à l'extérieur du plateau (27) entre deux desdits ressorts hélicoïdaux d'accouplement adjacents (23) de ce plateau et qui sont engagés chacun dans une encoche radiale conjuguée (36) du moyeu (7) pour accoupler en rotation le moyeu (7) et le plateau annulaire (27).

5. Système selon la revendication 4, **caractérisé en ce que** le moyeu (7) comprend au moins deux autres encoches radiales (34) adjacentes respectivement aux deux encoches conjuguées de réception (36) des doigts radiaux (33) et permettant un montage axial en aveugle dans le moyeu (7) du plateau annulaire (27) accouplé à la paroi annulaire (20) par insertion provisoire des doigts (33) dans les deux autres encoches (34) qui ont l'un de leurs côtés en forme de rampe (35) permettant d'amener le doigt correspondant (33) dans l'encoche conjuguée (36) du moyeu (7) par rotation du rotor (6) et du moyeu (7) relativement au plateau annulaire (27) dans le sens approprié pour l'accouplement en rotation du plateau annulaire (27) au moyeu (7).

6. Système selon la revendication 4 ou 5, **caractérisé en ce que** le plateau annulaire (27) comprend au moins deux parois arquées (40) solidaires perpendiculairement du plateau et à travers lesquelles font saillie radialement respectivement les deux doigts d'accouplement (33).

7. Système selon la revendication 6, **caractérisé en ce que** chaque doigt radial (33) est solidaire d'un piston (37) monté coulissant à l'encontre de la force de rappel d'un ressort (38) dans un cylindre radial (39) fixé sous la paroi arquée associée (40) située au voisinage du bord externe du plateau annulaire (27).

8. Système selon la revendication 4 ou 5, **caractérisé en ce que** chaque doigt radial (33) est solidaire d'une lame radialement flexible (42) fixée par ses extrémités, suivant une direction circonférentielle, sur deux parois circonférentiellement espacées (43) solidaires du plateau annulaire (27) perpendiculairement à celui-ci au voisinage de son bord externe.

9. Système selon la revendication 8, **caractérisé en ce que** chaque doigt (33) est fixé au milieu de la lame flexible (42) en faisant saillie au-dessus de celle-ci.

10. Système selon l'une des revendications 4 à 9, **caractérisé en ce que** chaque doigt (33) est en forme de tenon pouvant s'engager dans l'encoche provisoire (34) ou l'encoche définitive correspondante (36) en forme de rainure s'étendant axialement dans le moyeu (7).

11. Système selon l'une des revendications 3 à 10, **caractérisé en ce que** le plateau annulaire (27) et la paroi annulaire (20) sont retenus axialement l'un par rapport à l'autre par une ou plusieurs languettes radialement élastiques (31) s'étendant axialement du plateau annulaire (27), s'engageant dans un ou plusieurs passages traversants de la paroi annulaire (20) et ayant leur extrémité libre recourbée (31a) en appui sur la face de la paroi annulaire (20) opposée à celle comportant les crabots (24).

12. Système selon l'une des revendications 3 à 11, **caractérisé en ce qu'**une bague annulaire élastique (32) d'une raideur axiale déterminée est interposée entre la paroi annulaire (20) et le plateau annulaire (27) du moyeu (7) pour les maintenir espacés parallèlement l'un par rapport à l'autre et autorisant un pivotement relatif angulairement limité hors de leur position parallèle pour filtrer les écarts en flexion de l'arbre primaire (10) et les acyclismes du moteur thermique et / ou les déformations géométriques de cet arbre.

13. Système selon la revendication 1, **caractérisé en ce que** les moyens d'accouplement comprennent au moins deux ressorts hélicoïdaux de compression (23) montés précontraints de façon angulairement équidistante suivant sensiblement une même circonférence respectivement dans deux cages (25), chaque cage étant définie par une première paroi rigide (26a) solidaire perpendiculairement de la face d'un plateau annulaire (56) logé dans le moyeu (7) et fixé au flasque (21) de celui-ci, par exemple par des vis de fixation (57), et une seconde paroi rigide (26b) parallèle à la première paroi et solidaire perpendiculairement de la face opposée d'un autre plateau annulaire (58) fixé à la paroi annulaire (20), par exemple par des vis de fixation (59), chaque ressort (23) étant logé entre une desdites première (26a) et une desdites seconde (26b) parois parallèles de façon que ses parties de spires supérieure et inférieure traversent respectivement deux fenêtres rectangulaires (26a1) des deux parois et les spires extrêmes soient en appui respectivement sur deux bords d'extrémités circonférentiellement espacés (26a2,26b2) des deux fenêtres, et au moins deux paires de crabots parallèles (24) solidaires perpendiculairement de la face de l'autre plateau annulaire (58) de façon angulairement équidistante suivant une même circonférence, les deux crabots (24) de chaque paire étant en appui respectivement sur les deux spires extrêmes du ressort d'accouplement correspondant (23) en s'étendant parallèlement aux deux parois (26a,26b).

14. Système selon la revendication 13, **caractérisé en ce que** ladite première paroi rigide (26a) d'une cage (25) fait partie d'une paroi cylindrique (60) solidaire du plateau annulaire (56) fixé au flasque (21) du moyeu (7) ou est rapportée à cette paroi cylindrique et la seconde paroi rigide (26b) de la cage (25) est solidaire d'un moyeu (61) de l'autre plateau (58) fixé à la paroi annulaire (20).

## Claims

1. Hybrid propulsion system for a motor vehicle, comprising a combustion engine, of which the drive shaft (11) turns a flywheel (12); a gearbox (3); a reversible rotary electric machine (1) comprising a stator (5) secured to a fixed casing (8) and a rotor (6) secured to a hub (7) mounted concentrically with the primary shaft (10) of the gearbox being mounted to rotate relative to the fixed casing (8); and clutch means (14, 15) that can be made in particular to couple the flywheel (12) with the primary shaft (10) of the gearbox, the rotor (6) of the rotary electric machine (1) being coupled to the primary shaft (10) by an elastic coupling device in order to operate the rotary electric machine (1) particularly in generator mode such that it generates electrical current to power the vehicle ancillaries, the said elastic coupling device comprising an annular wall (20) that rotates as one with the primary shaft (10) and runs transversely thereto, a flange (21) of the hub (7) parallel to the annular wall (20), and elastic means (23, 24) of like stiffness in the circumferential direction interposed between the annular wall (20) and the flange (21) in order to couple these two items together in terms of rotation and damp out relative rotational movements between the annular wall (20) and the flange (21) that result from movements of the primary shaft (10) and acyclic operation of the combustion engine and/or geometric deformation of this shaft, **characterized in that** the annular wall (20) is secured to a generally cylindrical central part (47) coaxial with the primary shaft (10) and that rotates as one with the primary shaft (10) being secured thereto by splines (48); the cylindrical central part (47) being housed concentrically with annual radial clearance in a central cylindrical part (22) of the hub (7) to which part the flange (21) of the hub is secured.

2. System according to Claim 1, **characterized in that** the elastic coupling means comprise at least two helical compression springs (23) mounted with preload so that they are equal angles apart on substantially one and the same circumference in a respective one of two cages (25) that rotate as one with the flange (21) of the hub (7), and two pairs of parallel dogs secured to one and the same side of the annular wall (20) so that they are equal angles apart along one and the same circumference, the two coupling dogs (24) of each pair pressing respectively against the two end turns of one of the said two corresponding helical coupling springs (23).

3. System according to Claim 2, **characterized in that** the cages (25) that house the helical coupling springs (23) are fixed to one face of an annular plate (27) housed in the hub (7) of the rotor (6) adjacent to the flange (21) while coupled in terms of rotation to the hub (7), and each cage (25) comprises two parallel walls (26) extending at right angles to the face of the annular plate (27) and between which is housed the corresponding helical coupling spring (23) of which the upper and lower turn parts pass respectively through two rectangular openings (28) in the two walls (26) and the end turns press respectively against the two circumferentially-spaced end edges (28a) of the two openings (28), the two dogs (24) associated with the helical coupling spring (23) and pressing against the end turns of the spring running parallel to the two walls (26).

4. System according to Claim 3, **characterized in that** the annular plate (27) housed in the hub (7) comprises at least two fingers (33) projecting radially and elastic out of the plate (27) between two of the said adjacent helical coupling springs (23) of this plate and which are each engaged in a mating radial notch (36) of the hub (7) in order to couple the hub (7) and the annular plate (27) in terms of rotation.

5. System according to Claim 4, **characterized in that** the hub (7) comprises at least two other radial notches (34) respectively adjacent to the two mating notches (36) that accept the radial fingers (33) and that allow the annular plate (27) coupled to the annular wall (20) to be blind-mounted axially in the hub (7) by temporarily inserting the fingers (33) into the other two notches (34) one of the sides of which is in the form of a ramp (35) to allow the corresponding finger (33) to be brought into the mating notch (36) of the hub (7) by turning the rotor (6) and the hub (7) relative to the annular plate (27) in the appropriate direction for rotational coupling of the annular plate (27) to the hub (7).

6. System according to Claim 4 or 5, **characterized in that** the annular plate (27) comprises at least two bowed walls (40) secured at right angles to the plate and through which the two coupling fingers (33) respectively project in a radial direction.

7. System according to Claim 6, **characterized in that** each radial finger (33) is secured to a piston (37) mounted to slide against the action of the return force of a spring (38) in a radial cylinder (39) attached under the associated bowed wall (40) located near the outer edge of the annular plate (27).

8. System according to Claim 4 or 5, **characterized in that** each radial finger (33) is secured to a radially flexible blade (42) attached via its ends, in the circumferential direction, to two circumferentially spaced walls (43) secured to the annular plate (27) at right angles thereto and near the outer edge thereof.

9. System according to Claim 8, **characterized in that** each finger (33) is attached to the middle of the flexible blade (42) projecting above the latter.

10. System according to one of Claims 4 to 9, **characterized in that** each finger (33) is in the form of a peg that can fit into the temporary notch (34) or into the corresponding slot-shaped definitive notch (33) that runs axially along the hub (7).

11. System according to one of Claims 3 to 10, **characterized in that** annular plate (27) and the annular wall (20) are held axially together by one or more radially elastic tabs (31) extending axially from the annular plate (27), engaging in one or more through-passages in the annular wall (20) and having their curved free end (31a) pressing against the opposite face of the annular wall (20) to the face that comprises the dogs (24).

12. System according to one of Claims 3 to 11, **characterized in that** an elastic annular ring (32) of determined axial stiffness is interposed between the annular wall (20) and the annular plate (27) of the hub (7) in order to keep these spaced apart parallel to one another and allow them a limited relative angular pivoting from their parallel position in order to filter out flexural discrepancies of the primary shaft (10) and acyclic operation of the combustion engine and/or geometric deformations of this shaft.

13. System according to Claim 1, **characterized in that** the coupling means comprise at least two helical compression springs (23) mounted with preload equal angular distances apart on substantially one and the circumference in a respective one of two cages (25), each cage being defined by a rigid first wall (26a) secured at right angles to the face of an annular plate (56) housed in the hub (7) and attached to the flange (21) thereof, for example by fixing screws (57), and a rigid second wall (26b) parallel to the first wall and secured at right angles to the opposite face of another annular plate (58) attached to the annular wall (20), for example by fixing screws (59), each spring (23) being housed between one of the said first (26a) and one of the said second (26b) parallel walls such that its upper and lower turn parts pass respectively through two rectangular openings (26a1) in the two walls and the end turns press respectively against two circumferentially-spaced end edges (26a2, 26b2) of the two openings, and at least two pairs of parallel dogs (24) secured at right angles to the face of the other annular plate (58) such that they are equal angular distance apart along one and the same circumference, the two dogs (24) of each pair pressing respectively against the two end turns of the corresponding coupling spring (23) and running parallel to the two walls (26a, 26b).

14. System according to Claim 13, **characterized in that** said rigid first wall (26a) of one cage (25) forms part of a cylindrical wall (60) secured to the annular plate (56) attached to the flange (21) of the hub (7) or is connected to this cylindrical wall and the rigid second wall (26b) of the cage (25) is secured to a hub (61) of the other plate (58) fixed to the annular wall (20).

## Patentansprüche

1. Hybridantriebssystem eines Kraftfahrzeugs, das einen Verbrennungsmotor aufweist, dessen Antriebswelle (11) ein Schwungrad (12) in Drehung antreibt; ein Schaltgetriebe (3); eine reversible elektrische drehende Maschine (1), die einen Stator (5) aufweist, der fest mit einem stationären Gehäuse (8) verbunden ist, und einen Rotor (6), der fest mit einer Nabe (7) verbunden ist, die konzentrisch auf die Hauptwelle (10) des Schaltgetriebes montiert und in Drehung in Bezug zu dem stationären Gehäuse (8) montiert ist; und Kupplungsmittel (14, 15), die gesteuert werden können, um insbesondere das Schwungrad (12) mit der Hauptwelle (10) des Schaltgetriebes zu koppeln, wobei der Rotor (6) der drehenden elektrischen Maschine (1) mit der Hauptwelle (10) über eine elastische Kupplungsvorrichtung gekoppelt ist, um die drehende elektrische Maschine (1) funktionieren zu lassen, insbesondere im Stromerzeugungsbetrieb zur Versorgung der Geräte des Fahrzeugs, wobei die elastische Kupplungsvorrichtung eine ringförmige Wand (20) aufweist, die in Drehung fest mit der Hauptwelle (10) verbunden ist und sich quer zu dieser Letzteren erstreckt, einen Flansch (21) der Nabe (7) parallel zu der ringförmigen Wand (20) sowie elastische Mittel (23, 24) mit der gleichen Steifigkeit in Umfangsrichtung, die zwischen die ringförmige Wand (20) und den Flansch (21) eingefügt sind, um diese Letzteren in Drehung miteinander zu koppeln und die relativen Bewegungen in Drehung zwischen der ringförmigen Wand (20) und dem Flansch (21), die sich aus den Bewegungen der Hauptwelle (10) und den Azyklismen des Verbrennungsmotors und / oder den geometrischen Verformungen dieser Welle ergeben, zu dämpfen, **dadurch gekennzeichnet, dass** die ringförmige Wand (20) fest mit einem zentralen, allgemein zylindrischen Teil (47) verbunden ist, der zu der Hauptwelle (10) koaxial und in Drehung mit der Hauptwelle (10) über Keile (48) verbunden ist; wobei der zentrale zylindrische Teil (47) konzentrisch mit radialem ringförmigem Spiel in einem zentralen zylindrischen Teil (22) der Nabe (7), mit der der Flansch (21) der Nabe fest verbunden ist, untergebracht ist.

2. System nach Anspruch 1, **dadurch gekennzeichnet, dass** die elastischen Kupplungsmittel mindestens zwei Spiraldruckfedern (23) aufweisen, die vorgespannt winkelig in gleicher Entfernung englang im Wesentlichen eines gleichen Umfangs jeweils in zwei Käfigen (25), die in Drehung fest mit dem Flansch (21) der Nabe (7) verbunden sind, installiert sind, und zwei Paar parallele Klauen (24), die auf einer gleichen Seite fest mit der ringförmigen Wand (20) winkelig in gleicher Entfernung entlang eines gleichen Umfangs fest verbunden sind, wobei die zwei Kupplungsklauen (24) jedes Paars jeweils auf den zwei Endwindungen einer der zwei Kupplungsspiralfedern (23) aufliegen.

3. System nach Anspruch 2, **dadurch gekennzeichnet, dass** die Aufnahmekäfige (25) der Kupplungsspiralfedern (23) auf einer Seite einer ringförmigen Platte (27) befestigt sind, die in der Nabe (7) des Rotors (6) neben dem Flansch (21) untergebracht und in Drehung mit der Nabe (7) gekoppelt sind, und dass jeder Käfig (25) zwei parallele Wände (26) aufweist, die sich senkrecht zu der Seite der ringförmigen Platte (27) erstrecken, und zwischen welchen die entsprechende Kupplungsspiralfeder (23) untergebracht ist, deren obere und untere Windungsteile jeweils zwei rechteckige Fenster (28) der zwei Wände (26) durchqueren und die Endwindungen jeweils auf den zwei beabstandeten Umfangsendrändern (28a) der zwei Fenster (28) aufliegen, wobei sich die zwei Klauen (24), die zu der Kupplungsspiralfeder (23) gehören und auf den Endwindungen der Feder aufliegen, parallel zu den zwei Wänden (26) erstrecken.

4. System nach Anspruch 3, **dadurch gekennzeichnet, dass** die ringförmige Platte (27), die in der Nabe (7) untergebracht ist, mindestens zwei Finger (33) aufweist, die radial elastisch aus der Platte (27) zwischen zwei der benachbarten Kupplungsspiralfedern (23) dieser Platte vorstehen und jeweils in eine dazugehörende radiale Kerbe (36) der Nabe (7) eingefügt sind, um die Nabe (7) und die ringförmige Platte (27) in Drehung zu koppeln.

5. System nach Anspruch 4, **dadurch gekennzeichnet, dass** die Nabe (7) mindestens zwei weitere radiale Kerben (34) jeweils neben den zwei dazu gehörenden Aufnahmekerben (36) der radialen Finger (33) aufweist, die eine axiale Blindmontage in der Nabe (7) der ringförmigen Platte (27) erlauben, die an die ringförmige Wand (20) durch vorläufiges Einfügen der Finger (33) in die zwei anderen Kerben (34) gekoppelt ist, von welchen eine Seite eine Rampenform (35) hat, die es erlaubt, den entsprechenden Finger (33) in die dazugehörende Kerbe (36) der Nabe (7) durch Drehen des Rotors (6) und der Nabe (7) in Bezug zu der ringförmigen Platte (27) in die entsprechende Richtung für das Koppeln in Drehung der ringförmigen Platte (27) an der Nabe (7) zu bringen.

6. System nach Anspruch 4 oder 5, **dadurch gekennzeichnet, dass** die ringförmige Platte (27) mindestens zwei gebogene Wände (40) aufweist, die senkrecht fest mit der Platte verbunden sind und durch welche radial jeweils die zwei Kupplungsfinger (33) stehen.

7. System nach Anspruch 6, **dadurch gekennzeichnet, dass** jeder radiale Finger (33) fest mit einem Kolben (37) verbunden ist, der gegen die Rückholkraft einer Feder (38) in einem radialen Zylinder (39) gleitend montiert ist, der unterhalb der dazu gehörenden gebogenen Wand (40), die in der Nähe des Außenrands der ringförmigen Platte (27) liegt, befestigt ist.

8. System nach Anspruch 4 oder 5, **dadurch gekennzeichnet, dass** jeder radiale Finger (33) fest mit einer radial biegsamen Klinge (42), die an ihren Enden befestigt ist, entlang einer Umfangsrichtung an zwei entlang des Umfangs beabstandeten Wänden (43), die mit der ringförmigen Platte (27) fest verbunden sind, senkrecht zu dieser in der Nähe ihres Außenrands verbunden ist.

9. System nach Anspruch 8, **dadurch gekennzeichnet, dass** jeder Finger (33) in der Mitte der biegsamen Klinge (42) durch Vorstehen oberhalb dieser befestigt ist.

10. System nach einem der Ansprüche 4 bis 9, **dadurch gekennzeichnet, dass** jeder Finger (33) eine Zapfenform hat, die sich in die vorläufige Kerbe (34) oder in die entsprechende endgültige Kerbe (3) in Rillenform, die sich axial in der Nabe (7) erstreckt, einfügen kann.

11. System nach einem der Ansprüche 3 bis 10, **dadurch gekennzeichnet, dass** die ringförmige Platte (27) und die ringförmige Wand (20) axial zueinander durch eine oder mehrere radial elastische Zungen (27) gehalten werden, die sich axial von der ringförmigen Platte (27) erstrecken, die sich in einen oder mehrere durchstoßende Durchgänge der ringförmigen Wand (20) fügen die ihr freies umgebogenes Ende (31a) in Auflage auf der Seite der ringförmigen Wand (20) haben, die der mit den Klauen (24) entgegen gesetzt ist.

12. System nach einem der Ansprüche 3 bis 11, **dadurch gekennzeichnet, dass** ein elastischer ringförmiger Ring (32) mit einer bestimmten axialen Steifigkeit zwischen die ringförmige Wand (20) und die ringförmige Platte (27) der Nabe (7) eingefügt wird, um sie zueinander parallel beabstandet zu halten und ein relatives winkeliges beschränktes Schwenken aus ihrer parallelen Position zu erlauben, um die Biegeabweichungen der Hauptwelle (10) und die Azyklismen des Verbrennungsmotors und / oder die geometrischen Verformungen dieser Welle herauszufiltern.

13. System nach Anspruch 1, **dadurch gekennzeichnet, dass** die Kupplungsmittel mindestens zwei Spiraldruckfedern (23) aufweisen, die vorgespannt winkelig in gleicher Entfernung entlang eines im Wesentlichen gleichen Umfangs jeweils in zwei Käfigen (25) montiert sind, wobei jeder Käfig von einer ersten starren Wand (26a) definiert ist, die senkrecht fest mit der Seite einer ringförmigen Platte (56) verbunden ist, die in der Nabe (7) untergebracht und an deren Flansch (21) befestigt ist, zum Beispiel mit Befestigungsschrauben (57), und von einer zweiten starren Wand (26b) parallel zu der ersten Wand und senkrecht fest mit der entgegen gesetzten Seite einer anderen ringförmigen Platte (58) verbunden, die an der ringförmigen Wand (20) zum Beispiel mit Befestigungsschrauben (59) befestigt ist, wobei jede Feder (23) zwischen einer der ersten (26a) und einer der zweiten (26b) parallelen Wände derart untergebracht ist, dass ihre oberen und unteren Windungsteile jeweils zwei rechteckige Fenster (26a1) der zwei Wände durchqueren und dass die Endwindungen jeweils auf zwei Rändern umfänglich beabstandeter Ränder (26a2, 26b2) der zwei Fenster aufliegen, und mindestens zwei Paare paralleler Klauen (24), die fest senkrecht mit der Seite der anderen ringförmigen Platte (58) winkelig in gleichen Entfernungen entlang eines gleichen Umfangs verbunden sind, wobei die zwei Klauen (24) jedes Paars jeweils auf den zwei Endwindungen der entsprechenden Kupplungsfeder (23) aufliegen und sich parallel zu den zwei Wänden (26a, 26b) erstrecken.

14. System nach Anspruch 13, **dadurch gekennzeichnet, dass** die erste starre Wand (26a) eines Käfigs (25) zu einer zylindrischen Wand (60) gehört, die fest mit der ringförmigen Platte (56) verbunden ist, die an dem Flansch (21) der Nabe (7) befestigt oder an diese zylindrische Wand angebaut ist, und dass die zweite starre Wand (26b) des Käfigs (25) fest mit einer Nabe (61) der anderen Platte (58), die an der ringförmigen Wand (20) befestigt ist, verbunden ist.
